# FASCICULE DE BREVET EUROPEEN

(11) **EP 0 840 158 B1**
(45) Date de publication et mention de la délivrance du brevet: **25.02.2004**
(21) Numéro de dépôt: 97402273.3
(22) Date de dépôt: 30.09.1997
(51) Int. Cl.: G02B 26/06, G01J 9/00

(54) **Dispositif pour déterminer les défauts de phase d'ondes électromagnétiques**
Vorrichtung zur Bestimmung von Phasenfehlern elektromagnetischer Wellen
Device for determining phase errors of electromagnetic waves

(30) Priorité: 31.10.1996 FR 9613316
(43) Date de publication de la demande: 06.05.1998
(73) Titulaire: COMPAGNIE INDUSTRIELLE DES LASERS CILAS, F-91460 Marcoussis (FR)
(72) Inventeur: Gaffard, Jean-Paul, 77300 Fontainebleau (FR); Gosselin, Patrick, 75015 Paris (FR)
(74) Mandataire: Bonnetat, Christian

(56) Documents cités:
- J.E.GRAVES ET AL.: "Adaptive optics at the University of Hawaii IV: A photon counting curvature wavefront sensor" PROC. SPIE: ADAPTICE OPTICS IN ASTRONOMY, vol. 2201, 1994, pages 502-507, XP002036053
- J.E.GRAVES ET AL.: "The University of Hawaii adaptive optics system: III The Wavefront Curvature Sensor" PROC. SPIE: ACTIVE AND ADAPTIVE OPTICAL SYSTEMS, vol. 1542, 1991, pages 262-272, XP002036054
- F.RODDIER ET AL.: "A SIMPLE LOW-ORDER ADAPTIVE OPTICS SYSTEM FOR NEAR-INFRARED APPLICATIONS" PUBLICATIONS OF THE ASTRONOMICAL SOCIETY OF THE PACIFIC, vol. 103, janvier 1991, pages 131-149, XP002036055

## Description

La présente invention concerne un dispositif pour déterminer les défauts de phase d'ondes électromagnétiques engendrées par une source lumineuse et transmises par un instrument optique. Ledit dispositif s'applique plus particulièrement au cas où la source lumineuse est étendue.

De tels défauts de phase sont :
- soit permanents, par exemple lorsqu'ils sont engendrés par des déformations constantes d'un élément optique, comme un miroir ;
- soit variables dans le temps, par exemple lorsqu'ils sont engendrés par des turbulences de l'atmosphère.

La connaissance de tels défauts de phase d'ondes électromagnétiques peut, notamment, être utilisée :
- pour évaluer les qualités optiques de l'instrument optique considéré, par exemple un télescope ou
- pour déterminer des ordres de commande d'un moyen de correction, par exemple un miroir déformable, disposé sur le trajet desdites ondes électromagnétiques et destiné à corriger lesdits défauts de phase.

On connaît plusieurs dispositifs susceptibles de déterminer de tels défauts de phase d'ondes électromagnétiques.

Un premier dispositif qui est connu sous le nom de "Shack Hartmann" comporte à cet effet une batterie de microlentilles qui engendrent les images de la source sur un récepteur du type à dispositif à transfert de charge (DTC en français ou CCD en anglais "Charge Coupled Device"). Avec un tel dispositif, il suffit de calculer les barycentres desdites images et de déterminer leurs déplacements par rapport à une origine fixe.

Toutefois, ce dispositif qui est efficace pour des sources ponctuelles est mal adapté à des sources étendues et le traitement d'image préconisé peut difficilement être réalisé en temps réel.

Un deuxième dispositif connu pour déterminer des défauts de phase est un interféromètre différentiel. Un tel interféromètre utilise une image de la pupille de l'instrument optique et comporte un élément optique biréfringent qui dédouble ladite image de la pupille. Les deux images partielles obtenues sont déphasées d'environ un quart de longueur d'onde. Ledit interféromètre différentiel comporte, de plus, des moyens pour mesurer les éclairements résultant des interférences produites entre ces deux images partielles, éclairements qui sont proportionnels à la pente locale des déformations de la surface d'onde, ce qui permet de déterminer lesdits défauts de phase.

Toutefois, ce dispositif connu ne permet pas de mesurer tous les types de défauts de phase, puisque des ambiguïtés apparaissent dans les mesures, notamment lorsque lesdites pentes locales sont trop fortes.

Un troisième dispositif connu est un analyseur de courbure, par exemple tel que celui décrit dans un article de Roddier, Northcott et Graves, intitulé "A simple low-order adaptive optics system for near-infrared applications" et paru dans la revue "Publications of the Astronomical Society of the Pacific" en janvier 1991. Un tel analyseur de courbure comporte :
- un système de réception qui comprend un plan de mesure muni d'une pluralité de zones de mesure pourvues de photodiodes susceptibles de mesurer l'intensité de la lumière reçue. A cet effet, ledit système de réception comporte une batterie de lentilles qui focalisent les ondes électromagnétiques sur lesdites photodiodes ;
- une lentille de collimation pour envoyer les ondes électromagnétiques transmises par ledit instrument optique, audit plan de mesure ;
- un système de défocalisation constitué d'une lentille ou d'un miroir à focale variable et susceptible d'envoyer audit système de réception pour leur mesure, au moins une paire de plans associés conjugués du plan pupillaire de l'instrument optique ; et
- une unité de calcul déterminant lesdits défauts de phase, à partir des mesures réalisées par ledit système de réception sur lesdits plans associés.

Le dispositif présenté ci-dessus est satisfaisant, aussi bien dans sa mise en oeuvre, que dans la précision de ses mesures, lorsque les ondes électromagnétiques à analyser sont engendrées par une source ponctuelle ou réduite spatialement. Toutefois, ce dispositif ne peut pas être mis en oeuvre pour des sources étendues.

La présente invention a pour objet de remédier à ces inconvénients. Elle concerne un dispositif du type rappelé en dernier, susceptible de déterminer, de façon rapide et précise, si nécessaire en temps réel, les défauts de phase d'ondes électromagnétiques engendrées par une source lumineuse et transmises par un instrument optique, et ceci quelle que soit la taille de la source lumineuse, c'est-à-dire aussi bien pour une source ponctuelle, que pour une source étendue spatialement.

A cet effet, selon l'invention, le dispositif pour déterminer les défauts de phase d'ondes électromagnétiques engendrées par une source lumineuse et transmises par un instrument optique dispositif qui comporte les caractéristiques de la revendication 1. Les revendications dépendantes définissent des modes de réalisation additionels.

Selon l'invention, ledit filtre est choisi en fonction de la nature des défauts de phase à déterminer, pour rendre maximal le contraste des images détectées dans le plan de mesure.

Par conséquent, le dispositif conforme à l'invention permet de réaliser des mesures, aussi bien pour des sources limitées spatialement (éventuellement ponctuelles), que pour des sources étendues spatialement, y compris pour des sources présentant une extension spatiale qui est supérieure au champ observé par l'instrument optique.

De préférence, ledit filtre est réalisé sous forme d'un cache opaque muni d'un trou. Bien entendu, il est nécessaire que le diamètre de ce trou soit supérieur à la tache d'aberration produite par les défauts de phase dans ledit plan image de l'instrument optique.

Dans un premier mode de réalisation avantageux de l'invention, ledit filtre présente un profil de l'intensité lumineuse transmise, de type gaussien, tandis que dans un second mode de réalisation particulièrement avantageux, ledit filtre présent un profil en amplitude et en phase, de l'intensité lumineuse transmise, correspondant au profil en amplitude et en phase des aberrations optiques dues aux défauts de phase à déterminer.

De façon avantageuse, chacune des zones de mesure du système de réception est pourvue d'un récepteur photoélectrique du type à dispositif à transfert de charge.

Ainsi, le système de réception présente un bon échantillonnage spatial, au contraire du système de réception connu, rappelé ci-dessus et muni d'une batterie de lentilles.

De préférence, l'unité de calcul détermine les défauts de phase à partir des amplitudes d'une pluralité de modes correspondant à des formes géométriques déterminées, par exemple les modes de Zernike.

Dans ce cas, de façon avantageuse, ladite unité de calcul détermine, si nécessaire en temps réel, les amplitudes desdits modes, en prenant en compte les mesures réalisées par ledit système de réception, et ceci :
- dans un premier mode de réalisation, au moyen d'un calcul matriciel ; et
- dans un second mode de réalisation, au moyen d'un calcul de type neuronal, qui permet de tenir compte des non-linéarités.

Par ailleurs, dans un mode de réalisation avantageux de l'invention, le système de défocalisation comporte des moyens pour séparer les ondes électromagnétiques en deux faisceaux partiels et des moyens pour envoyer lesdits faisceaux partiels sur deux zones de réception différentes du plan de mesure, en leur faisant parcourir des trajets de longueurs différentes de sorte que ledit système de réception est susceptible de mesurer simultanément les deux plans associés, respectivement sur lesdites zones de réception.

Dans un autre mode de réalisation particulièrement avantageux, ledit système de défocalisation comporte des moyens pour séparer lesdites ondes électromagnétiques en deux faisceaux partiels et ledit système de réception comporte deux plans de mesure séparés, recevant chacun l'un desdits faisceaux partiels, lesdits plans de mesure étant agencés de manière à mesurer simultanément, respectivement l'un desdits deux plans associés.

Dans ce cas, lesdits plans de mesure sont montés, de façon avantageuse, sur un équipage mobile, dont le déplacement modifie la distance respectivement entre lesdits plans associés mesurés et le plan image de l'instrument optique.

Les figures du dessin annexé feront bien comprendre comment l'invention peut être réalisée. Sur ces figures, des références identiques désignent des éléments semblables.

La figure 1 montre schématiquement un dispositif conforme à l'invention, dans un premier mode de réalisation.

La figure 2 illustre schématiquement les plans mesurés lors de la mise en oeuvre de l'invention.

La figure 3 montre schématiquement un dispositif conforme à l'invention, dans un second mode de réalisation.

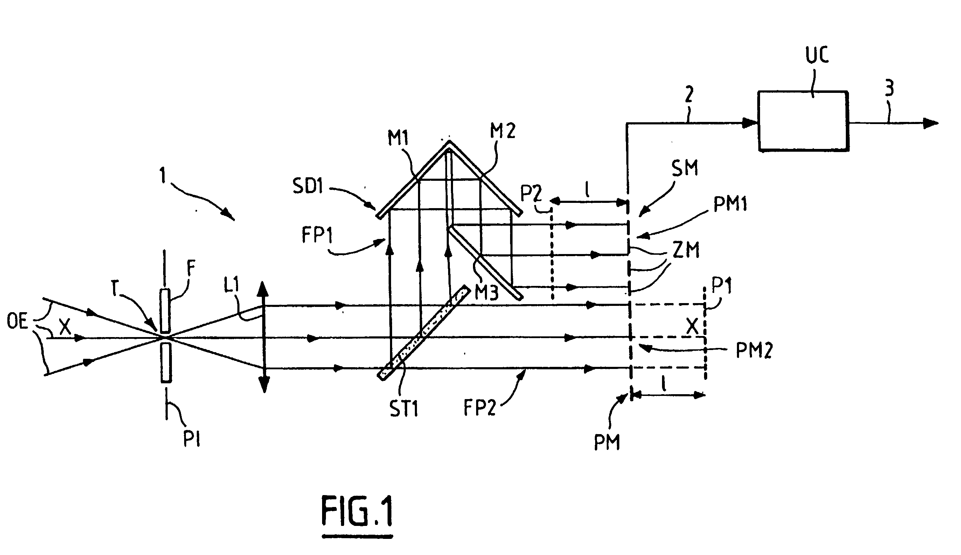

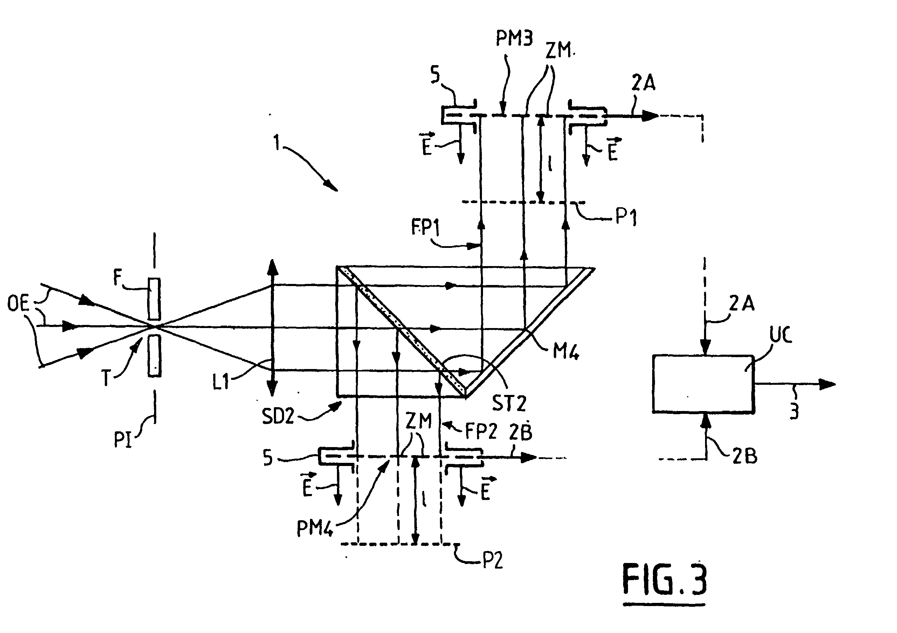

Le dispositif 1 conforme à l'invention et représenté schématiquement sur les figures 1 et 3, respectivement dans des premier et second modes de réalisation, est destiné à mesurer les défauts de phase d'ondes électromagnétiques OE engendrées par une source lumineuse non représentée et transmises par un instrument optique, par exemple un télescope, également non représenté. On notera que pour des raisons de clarté du dessin, les échelles ne sont pas respectées sur les figures 1 et 3.

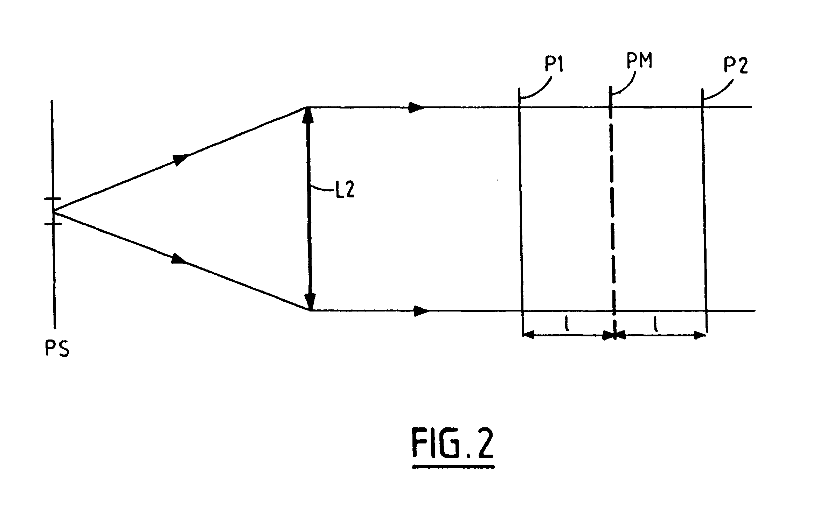

Ledit dispositif 1 est d'un type connu comportant :
- un système de réception SM qui comprend au moins un plan de mesure PM muni d'une pluralité de zones de mesure ZM susceptibles de mesurer l'intensité de la lumière reçue ;
- un système optique, à savoir une lentille Ll, collimatant les ondes électromagnétiques OE transmises par ledit instrument optique, sur ledit plan de mesure PM ;
- un système de défocalisation SD1 ou SD2 susceptible d'envoyer audit système de réception SM pour leur mesure, au moins une paire de plans associés P1 et P2, conjugués du plan pupillaire de l'instrument optique et également représentés sur la figure 2 ; et
- une unité de calcul UC déterminant lesdits défauts de phase, à partir des mesures réalisées par ledit système de réception SM et reçues par l'intermédiaire d'une liaison 2.

Grâce au système de défocalisation SD1 ou SD2, le système de réception SM est donc susceptible de mesurer l'intensité lumineuse de deux plans associés P1 et P2, représentés sur la figure 2. Selon l'invention, ces deux plans associés P1 et P2 sont des images de la pupille (voir lentille L2) de l'instrument optique non représenté. Sur la figure 2, on voit également le plan PS, plan image de la source. Les plans P1 et P2 sont situés à une même distance 1 de part et d'autre du plan de mesure PM du système de réception SM.

La différence entre les intensités lumineuses mesurées respectivement pour ces deux plans P1 et P2 fournit une valeur représentative de la courbure locale correspondante de la surface d'onde desdites ondes électromagnétiques OE. Ce principe est explicité dans l'article précité de Roddier, Northcott et Graves. Cette valeur est donc également représentative du défaut de phase correspondant recherché.

L'unité de calcul UC détermine les défauts de phase à partir des mesures fournies par le système de réception SM, en mettant en oeuvre la méthode de calcul précitée.

Ladite unité de calcul UC est susceptible de fournir les résultats de ses calculs, par l'intermédiaire d'une liaison 3, à un dispositif utilisateur, et notamment à un calculateur non représenté destiné à élaborer les ordres de commande d'un miroir déformable non représenté, de type connu, agencé sur le trajet des ondes électromagnétiques OE et destiné à corriger les défauts de phase de ces dernières.

Le dispositif de détermination de défaut de phase, tel que décrit ci-dessus, est uniquement susceptible de réaliser des mesures pour des sources ponctuelles ou de dimension réduite, et non pour des sources étendues spatialement.

Pour remédier à cet inconvénient, le dispositif 1 comporte de plus, selon l'invention, un filtre spatial F constitué d'un cache opaque muni d'un trou T, et agencé dans ledit plan image PI de l'instrument optique. Ce filtre F est formé de manière à limiter la surface de la source lumineuse vue par ledit système de réception SM, tout en permettant la transmission du spectre spatial des défauts de phase à déterminer.

Ledit filtre F est choisi en fonction de la nature des défauts de phase à déterminer, pour rendre maximal le contraste des images détectées dans le plan de mesure PM.

Par conséquent, ledit dispositif 1 conforme à l'invention permet de réaliser des mesures, aussi bien pour des sources limitées spatialement, que pour des sources étendues spatialement, y compris pour des sources présentant une extension spatiale qui est supérieure au champ observé par l'instrument optique.

On notera que le diamètre du trou T doit être supérieur au diamètre de la tache d'aberration produite par les défauts de phase, audit plan image PI. S'il n'en était pas ainsi, les hautes fréquences des défauts de phase seraient éliminées par le filtre F.

Dans un premier mode de réalisation de l'invention, le filtre F présente un profil, de l'intensité lumineuse transmise, de type gaussien.

En revanche, dans le cas où on connaît le profil en amplitude et en phase des aberrations dues aux défauts de phase à déterminer, on utilise de préférence, si possible, un filtre optimal adapté, dont le profil en amplitude et en phase correspond audit profil connu.

Dans une réalisation particulière, afin d'obtenir un bon échantillonnage spatial, les zones de mesure ZM sont constituées chacune d'un récepteur photoélectrique non représenté, du type à dispositif à transfert de charge, de sorte que le plan de mesure PM est muni d'une matrice de N x M récepteurs (avec par exemple N = M = 128).

En outre, le système de défocalisation SD1 comporte :
- un miroir semi-transparent ST1 qui sépare les ondes électromagnétiques OE en deux faisceaux partiels FP1 et FP2, dont l'un FP1 est envoyé directement sur une zone de réception PM1 du plan de mesure PM ; et
- un jeu de miroirs M1, M2 et M3 qui envoient le faisceau partiel FP2 sur une zone de réception PM2 du plan de mesure PM, adjacente à la zone de réception PM1.

Comme on peut le voir sur la figure 1, les faisceaux partiels FP1 et FP2 parcourent, dans ce cas, des trajets de longueurs différentes entre le miroir semi-transparent ST1 et le plan de mesure PM.

Ces différences de longueur sont choisies de sorte que la zone de mesure PM1 mesure l'intensité lumineuse représentative du plan P1 de la figure 2 et la zone de mesure PM2 mesure simultanément l'intensité lumineuse représentative du plan P2, comme illustré sur la figure 1.

Au contraire d'un dispositif à focale variable, le système de défocalisation SD1, tel que décrit précédemment, permet donc de réaliser simultanément les mesures pour les deux plans associés P1 et P2.

Bien entendu, les miroirs M1 et M3 peuvent être remplacés par d'autres éléments optiques, comme par exemple un jeu de prismes, pour adresser le faisceau partiel FP1 sur la zone de réception PM1 avec une longueur de trajet supérieure à celle du faisceau partiel FP2.

Dans un autre mode de réalisation de l'invention, représenté sur la figure 3 :
- le système de réception SM comprend deux plans de mesure PM3 et PM4 séparés l'un de l'autre et reliés à l'unité de calcul UC respectivement par des liaisons 2A et 2B ; et
- le système de défocalisation SD2 comprend un miroir semi-transparent ST1 pour engendrer deux faisceaux partiels FP1 et FP2, dont l'un FP2 est envoyé directement sur le plan de mesure PM4 et dont l'autre FP1 est envoyé sur un miroir M4 qui le renvoie sur le plan de mesure PM3.

Les trajets desdits faisceaux partiels FP1 et FP2 présentent des longueurs différentes, comme dans le mode de réalisation de la figure 1, pour les mêmes raisons que précité, nécessaires à la mise en oeuvre de l'invention.

De plus, les plans de mesure PM3 et PM4 sont montés sur un équipage mécanique 5, représenté partiellement et schématiquement sur la figure 3, et mobile en translation, comme illustré par des flèches E. Le déplacement de cet équipage mobile 5 rallonge ou raccourcit (selon le sens) simultanément les distances 1 respectivement entre les plans P1 et P2 et les plans de mesure PM3 et PM4.

On notera que l'on peut également concevoir un tel équipage mobile lorsque le système de réception comporte un seul plan de mesure muni de deux zones de réception séparées, comme dans le mode de réalisation de la figure 1.

## Revendications

1. Dispositif pour déterminer les défauts de phase d'ondes électromagnétiques (OE) engendrées par une source lumineuse et transmises par un instrument optique, ledit dispositif (1) comportant :
- un système de réception (SM) qui comprend au moins un plan de mesure (PM, PM3, PM4) muni d'une pluralité de zones de mesure (ZM) susceptibles de mesurer l'intensité de la lumière reçue ;
- un moyen de collimation (L1) pour envoyer les ondes électromagnétiques (OE) transmises par ledit instrument optique, audit plan de mesure (PM, PM3, PM4) ;
- un système de défocalisation (SD1, SD2) susceptible d'envoyer audit système de réception (SM), pour leur mesure, au moins une paire de plans associés (P1, P2), conjugués du plan pupillaire de l'instrument optique ; et
- une unité de calcul (UC) déterminant lesdits défauts de phase, à partir des mesures réalisées par ledit système de réception (SM) sur lesdits plans associés (P1, P2),
**caractérisé en ce qu'**il comporte de plus un filtre spatial (F) agencé dans le plan objet (PI) du moyen de collimation (L1), et **en ce que** ledit filtre spatial (F) est réalisé sous forme d'un cache opaque muni d'un trou (T), qui est formé de manière à limiter la surface de la source lumineuse vue par ledit système de réception (SM), tout en permettant la transmission du spectre spatial desdits défauts de phase.

2. Dispositif selon la revendication 1,
**caractérisé en ce que** le diamètre du trou (T) dudit cache opaque du filtre spatial (F) est supérieur au diamètre de la tache d'aberration produite par les défauts de phase, audit plan objet du moyen de collimation (L1).

3. Dispositif selon l'une quelconque des revendications 1 ou 2,
**caractérisé en ce que** ledit filtre (F) présente un profil de l'intensité lumineuse transmise, de type gaussien.

4. Dispositif selon l'une quelconque des revendications 1 ou 2, pour déterminer les défauts de phase d'ondes électromagnétiques (OE), pour lesquelles on connaît le profil en amplitude et en phase des aberrations optiques dues auxdits défauts de phase,
**caractérisé en ce que** ledit filtre (F) présente un profil en amplitude et en phase, de l'intensité lumineuse transmise, correspondant audit profil en amplitude et en phase des aberrations optiques dues aux défauts de phase à déterminer.

5. Dispositif selon l'une quelconque des revendications 1 à 4,
**caractérisé en ce que** chacune des zones de mesure (ZM) du système de réception (SM) est pourvue d'un récepteur photoélectrique du type à dispositif à transfert de charge.

6. Dispositif selon l'une quelconque des revendications 1 à 5, lesdits défauts de phase étant constitués d'une pluralité de modes correspondant à des formes géométriques déterminées,
**caractérisé en ce que** l'unité de calcul (UC) est arrangée pour déterminer les amplitudes desdits modes au moyen d'un calcul matriciel, en prenant en compte les mesures réalisées par ledit système de réception.

7. Dispositif selon l'une quelconque des revendications 1 à 5, lesdits défauts de phase étant constitués d'une pluralité de modes correspondant à des formes géométriques déterminées,
**caractérisé en ce que** l'unité de calcul (UC) est arrangée pour déterminer les amplitudes desdits modes au moyen d'un calcul de type neuronal, en prenant en compte les mesures réalisées par ledit système de réception.

8. Dispositif selon l'une quelconque des revendications précédentes,
**caractérisé en ce que** l'unité de calcul (UC) est arrangée pour réaliser les calculs en temps réel.

9. Dispositif selon l'une quelconque des revendications 1 à 8,
**caractérisé en ce que** ledit système de défocalisation (SD1) comporte des moyens (ST1) pour séparer les ondes électromagnétiques (OE) en deux faisceaux partiels (FP1, FP2) et des moyens (M1, M2, M3) pour envoyer lesdits faisceaux partiels (FP1, FP2) sur deux zones de réception différentes (PM1, PM2) du plan de mesure (PM), en leur faisant parcourir des trajets de longueurs différentes de sorte que ledit système de réception (SM) est susceptible de mesurer simultanément les deux plans associés (P1, P2), respectivement sur lesdites zones de réception (PM1, PM2).

10. Dispositif selon l'une quelconque des revendications 1 à 8,
**caractérisé en ce que** ledit système de défocalisation (SD2) comporte des moyens (ST2) pour séparer lesdites ondes électromagnétiques (OE) en deux faisceaux partiels (FP1, FP2), et **en ce que** ledit système de réception (SM) comporte deux plans de mesure séparés (PM3, PM4), recevant chacun l'un desdits faisceaux partiels (FP1, FP2), lesdits plans de mesure (PM3, PM4) étant agencés de manière à mesurer simultanément respectivement l'un desdits deux plans associés (P1, P2).

11. Dispositif selon la revendication 10,
**caractérisé en ce que** lesdits plans de mesure (PM3, PM4) sont montés sur un équipage mobile (5), dont le déplacement modifie la distance (1) respectivement entre lesdits plans associés mesurés (P1, P2) et le plan image (PI) de l'instrument optique.

## Patentansprüche

1. Vorrichtung zur Bestimmung von Phasenfehlern elektromagnetischer Wellen (OE), die von einer Lichtquelle erzeugt werden und durch ein optisches Instrument übertragen werden, wobei die Vorrichtung (1) umfasst:
- ein Empfangssystem (SM), das mindestens eine Messebene (PM, PM3, PM4) umfasst, die mit einer Vielzahl von Messbereichen (ZM) versehen ist, die in der Lage sind, die Stärke des empfangenen Lichts zu messen;
- ein Kollimationsmittel (L1), um die von dem optischen Instrument übertragenen elektromagnetischen Wellen (OE) an die Messebene (PM, PM3, PM4) zu senden;
- ein Defokussierungssystem (SD1, SD2), das in der Lage ist, an das Empfangssystem (SM) zu ihrer Messung mindestens ein Paar konjugierter, zusammengehöriger Ebenen (P1, P2) der Pupillenebene des optischen Instruments zu senden; und
- eine Recheneinheit (UC), die die Phasenfehler ausgehend von den Messungen bestimmt, die vom Empfangssystem (SM) an den zusammengehörigen Ebenen (P1, P2) durchgeführt wurden,
**dadurch gekennzeichnet, dass** sie darüber hinaus einen räumlichen Filter (F) umfasst, der in der Objektebene (PI) des Kollimationsmittels (L1) angeordnet ist, und dass der Raumfilter (F) in Form einer mit einer Öffnung (T) versehenen lichtundurchlässigen Abdeckung ausgebildet ist, die so gebildet ist, dass sie die Oberfläche der Lichtquelle vom Empfangssystem (SM) gesehen begrenzt, wobei sie gleichzeitig die Übertragung des räumlichen Spektrums der genannten Phasenfehler ermöglicht.

2. Vorrichtung nach Anspruch 1, **dadurch gekennzeichnet, dass** der Durchmesser der Öffnung (T) der lichtundurchlässigen Abdeckung des räumlichen Filters (F) größer ist als der Durchmesser des Aberrationsbereichs, der von den Phasenfehlern auf der Objektebene des Kollimationsmittels (L1) erzeugt wird.

3. Vorrichtung nach Anspruch 1 oder 2, **dadurch gekennzeichnet, dass** der Filter (F) ein Profil der übertragenen Lichtstärke vom Gauß-Typ aufweist.

4. Vorrichtung nach einem der Ansprüche 1 oder 2 zur Bestimmung von Phasenfehlern elektromagnetischer Wellen (OE), für die man das Amplituden- und Phasenprofil der optischen Abweichungen auf Grund der Phasenfehler kennt, **dadurch gekennzeichnet, dass** der Filter (F) ein Amplituden- und Phasenprofil der übertragenen Lichtstärke aufweist, das dem Amplituden- und Phasenprofil der optischen Abweichungen auf Grund der zu bestimmenden Phasenfehler entspricht.

5. Vorrichtung nach einem der Ansprüche 1 bis 4, **dadurch gekennzeichnet, dass** jeder der Messbereiche (ZM) des Empfangssystems (SM) mit einem photoelektrischen Empfänger des Typs mit ladungsgekoppeltem Element versehen ist.

6. Vorrichtung nach einem der Ansprüche 1 bis 5, wobei die Phasenfehler durch eine Vielzahl von Modi gebildet sind, die bestimmten geometrischen Formen entsprechen, **dadurch gekennzeichnet, dass** die Recheneinheit (UC) so ausgebildet ist, dass sie die Amplituden der Modi mittels einer Matrixrechnung bestimmt, wobei die von dem Empfangssystem durchgeführten Messungen berücksichtigt werden.

7. Vorrichtung nach einem der Ansprüche 1 bis 5, wobei die Phasenfehler durch eine Vielzahl von Modi gebildet sind, die bestimmten geometrischen Formen entsprechen, **dadurch gekennzeichnet, dass** die Recheneinheit (UC) so ausgebildet ist, dass sie die Amplituden der Modi mittels einer Rechnung vom neuronalen Typ bestimmt, wobei die von dem Empfangssystem durchgeführten Messungen berücksichtigt werden.

8. Vorrichtung nach einem der vorhergehenden Ansprüche, **dadurch gekennzeichnet, dass** die Recheneinheit (UC) so ausgebildet ist, dass sie die Berechnungen in Echtzeit durchführt.

9. Vorrichtung nach einem der Ansprüche 1 bis 8, **dadurch gekennzeichnet, dass** das Defokussierungssystem (SD1) Mittel (ST1) umfasst, um die elektromagnetischen Wellen (OE) in zwei Teilbündel (FP1, FP2) zu trennen, und Mittel (M1, M2, M3), um die Teilbündel (FP1, FP2) an zwei unterschiedliche Empfangsbereiche (PM1, PM2) der Messebene (PM) zu senden, wobei es sie Wegstrecken von unterschiedlicher Länge durchlaufen lässt, so dass das Empfangssystem (SM) in der Lage ist, gleichzeitig die beiden zusammengehörigen Ebenen (P1, P2) jeweils auf den Empfangsbereichen (PM1, PM2) zu messen.

10. Vorrichtung nach einem der Ansprüche 1 bis 8, **dadurch gekennzeichnet, dass** das Defokussierungssystem (SD2) Mittel (ST2) umfasst, um die elektromagnetischen Wellen (OE) in zwei Teilbündel (FP1, FP2) zu trennen, und dass das Empfangssystem (SM) zwei getrennte Messebenen (PM3, PM4) umfasst, die jeweils eines der Teilbündel (PF1, FP2) empfangen, wobei die Messebenen (PM3, PM4) so angeordnet sind, dass sie gleichzeitig jeweils eine der beiden zusammengehörigen Ebenen (P1, P2) messen.

11. Vorrichtung nach Anspruch 10, **dadurch gekennzeichnet, dass** die Messebenen (PM3, PM4) an einem beweglichen Organ (5) montiert sind, dessen Verschiebung jeweils die Entfernung (1) zwischen den gemessenen zusammengehörigen Ebenen (P1, P2) und der Bildebene (PI) des optischen Instruments verändert.

## Claims

1. Device for determining the phase errors of electromagnetic waves (OE) which are generated by a light source and transmitted by an optical instrument, said device (1) including:
- a reception system (SM) which comprises at least one measurement plane (PM, PM3, PM4) provided with a plurality of measurement zones (ZM) which can measure the intensity of the received light;
- a collimation means (L1) for sending to said measurement plane (PM, PM3, PM4) the electromagnetic waves (OE) transmitted by said optical instrument;
- a defocusing system (SD1, SD2) which can send at least one pair of associated planes (P1, P2), which are conjugate with the pupil plane of the optical instrument, to said reception system (SM) for them to be measured; and
- a computation unit (UC) which determines said phase errors on the basis of measurements taken by said reception system (SM) on said associated planes (P1, P2),
**characterized in that** it further includes a spatial filter (F) which is arranged in the object plane (PI) of the collimation means (L1), and **in that** said spatial filter (F) is produced in the form of an opaque mask provided with a hole (T) which is formed in such a way as to restrict the area of the light source seen by said reception system (SM), while allowing the spatial spectrum of said phase errors to be transmitted.

2. Device according to Claim 1, **characterized in that** the diameter of the hole (T) of said opaque mask of the spatial filter (F) is greater than the diameter of the aberration spot produced by the phase errors, at said object plane of the collimation means (L1).

3. Device according to either of Claims 1 and 2, **characterized in that** said filter (F) has a Gaussiantype profile of the transmitted light intensity.

4. Device according to either of Claims 1 and 2, for determining the phase errors of electromagnetic waves (OE), for which the amplitude and phase profile of the optical aberrations due to the phase errors are known, **characterized in that** said filter (F) has an amplitude and phase profile, of the said transmitted light intensity, corresponding to said amplitude and phase profile of the optical aberrations due to the phase errors to be determined.

5. Device according to any one of Claims 1 to 4, **characterized in that** each of the measurement zones (ZM) of the reception system (SM) is provided with a photoelectric receiver of the charge coupled device type.

6. Device according to any one of Claims 1 to 5, said phase errors consisting of a plurality of modes corresponding to given geometrical shapes, **characterized in that** the computation unit (UC) is arranged so that it determines the amplitudes of said modes using a matrix calculation, while taking into account the measurements taken by said reception system.

7. Device according to any one of Claims 1 to 5, said phase errors consisting of a plurality of modes corresponding to given geometrical shapes, **characterized in that** the computation unit (UC) is arranged so that it determines the amplitudes of said modes using a neurone-type calculation, while taking into account the measurements taken by said reception system.

8. Device according to any one of the preceding claims **characterized in that** the computation unit (UC) is arranged so that it performs the calculations in real-time.

9. Device according to any one of Claims 1 to 8, **characterized in that** said defocusing system (SD1) includes means (ST1) for splitting the electromagnetic waves (OE) into two partial beams (FP1, FP2), and means (M1, M2, M3) for sending said partial beams (FP1, FP2) on to two different reception zones (PM1, PM2) of the measurement plane (PM), while making them cover paths of different lengths so that said reception system (SM) can simultaneously measure the two associated planes (P1, P2) on said respective reception zones (PM1, PM2).

10. Device according to any one of Claims 1 to 8, **characterized in that** said defocusing system (SD2) includes means (ST2) for splitting said electromagnetic waves (OE) into two partial beams (FP1, FP2), and **in that** said reception system (SM) includes two separate measurement planes (PM3, PM4), each receiving one of said partial beams (FP1, FP2), said measurement planes (PM3, PM4) being arranged in such a way as to simultaneously measure a respective one of said two associated planes (P1, P2).

11. Device according to Claim 10, **characterized in that** said measurement planes (PM3, PM4) are mounted on a moving equipment item (5), the displacement of which modifies the distance (1) between said respective measured associated planes (P1, P2) and the image plane (PI) of the optical instrument.
